# EUROPEAN PATENT APPLICATION

(11) **EP 1 995 189 A1**
(43) Date of publication of application: **26.11.2008**
(21) Application number: 06728964.5
(22) Date of filing: 13.03.2006
(51) Int. Cl.: B65G 1/14

(54) **STORAGE DEVICE**

(71) Applicant: Hirata Corporation, Tokyo 142-0041 (JP)
(72) Inventor: WADA, Ryoichi, Tokyo 142-0041 (JP)
(74) Representative: Bauer, Clemens
(86) International application number: PCT/JP2006/304849
(87) International publication number: WO 2007/105283

(57) **Abstract**

[Objective] To provide a storage device which can flexibly and readily cope with storage of a plurality of articles-to-be-stored of various sizes and which can prevent occurrence of useless storage space to the greatest possible extent, thereby effectively utilizing storage space.

[Means for Solution] A storage device 1 has a plurality of mount tables Tab capable of storing a plurality of articles-to-be-stored Dab of different sizes placed thereon in a one-to-one correspondence, and at least one transfer device 300a, 300b moving in an upper horizontal plane located above the plurality of mount tables while holding the article-to-be-stored. The transfer device includes a holding mechanism for holding the article-to-be-stored; a vertically moving mechanism for vertically moving the holding mechanism; and a horizontally moving mechanism for moving the vertically moving mechanism in the upper horizontal plane. The plurality of the mount tables Tab store the articles-to-be-stored placed thereon such that the adjacent articles-to-be-stored are spaced apart from each other by a predetermined interval in a lower horizontal plane, and have a mount-table-moving mechanism 100 movable in at least one direction in a horizontal plane.

## Description

### TECHNICAL FIELD

The present invention relates to a storage device, and more particularly to a storage device having improved efficiency in accommodation and storage of a plurality of articles of different outline sizes.

### BACKGROUND ART

Conventionally, products of a variable outline dimension (articles-to-be-stored) are stored in a field in the following manner. A plurality of mount tables are orderly arranged at predetermined longitudinal and lateral intervals at predetermined positions in the field. The products are placed on the mount tables in a one-to-one correspondence for storage and management (Patent Document 1).

However, in the case where a product feature raises a large dimensional difference between a product having a maximum outline size and a product having a minimum outline size, such a storage device has a drawback in that, since the mount tables are arranged to the dimension of a product having the maximum outline size, placement of products having the minimum outline size on the mount tables involves occurrence of a large space between adjacent products having the minimum outline size, resulting in occurrence of useless storage space.

In the case where storage spaces dedicated to sizes of products are provided, in order to move the products of various sizes to the respectively dedicated storage spaces for storage in array, the mount tables, on which the respective products are placed, must be sequentially moved to predetermined positions along two orthogonal directions for arrangement in array. This work is labor intensive. Patent Document 1: Japanese Patent Application Laid-Open (*kokai*) No. 2000-95309

### DISCLOSURE OF THE INVENTION

### PROBLEMS TO BE SOLVED BY THE INVENTION

An object of the present invention is to solve the above-mentioned problems in the conventional storage device and to provide a storage device which can flexibly and readily cope with storage of a plurality of articles-to-be-stored of various sizes and which, even when an article feature raises a large dimensional difference between an article-to-be-stored having a maximum outline size and an article-to-be-stored having a minimum outline size, can prevent occurrence of useless storage space to the greatest possible extent, thereby effectively utilizing storage space.

### MEANS FOR SOLVING THE PROBLEMS

According to the present invention, the above-mentioned problems can be solved by the following storage device. The storage device has a plurality of mount tables capable of storing a plurality of articles-to-be-stored of different sizes placed thereon in a one-to-one correspondence, and at least one transfer device moving in an upper horizontal plane located above the plurality of mount tables while holding the article-to-be-stored. The transfer device comprises a holding mechanism for holding the article-to-be-stored; a vertically moving mechanism for vertically moving the holding mechanism; and a horizontally moving mechanism for moving the vertically moving mechanism in the upper horizontal plane. The plurality of the mount tables store the articles-to-be-stored placed thereon such that the adjacent articles-to-be-stored are spaced apart from each other by a predetermined interval in a lower horizontal plane, and have a mount-table-moving mechanism movable in at least one direction in a horizontal plane.

According to the storage device, the plurality of mount tables capable of storing a plurality of articles-to-be-stored of different sizes placed thereon in a one-to-one correspondence store the articles-to-be-stored placed thereon such that the adjacent articles-to-be-stored are spaced apart from each other by a predetermined interval in the lower horizontal plane, and have the mount-table-moving mechanism movable in at least one direction in a horizontal plane. Thus, when the plurality of articles-to-be-stored of different sizes are to be stored in a field, the mount-table-moving mechanism is operated for moving the mount tables on which the articles-to-be-stored of a relevant size are respectively placed, to positions where useless storage space would otherwise arise. By this procedure, the plurality of articles-to-be-stored of different sizes can be stored at optimum intervals.
Thus, the storage device can flexibly and readily cope with storage of the plurality of articles-to-be-stored of various sizes. Even when an article feature raises a large dimensional difference between an article-to-be-stored having a maximum outline size and an article-to-be-stored having a minimum outline size, the storage device can prevent occurrence of useless storage space to the greatest possible extent, thereby effectively utilizing storage space.

According to a preferred embodiment, in the storage device, the plurality of mount tables have the mount-table-moving mechanism for each of the mount tables. By virtue of this configuration, utilization of storage space can be maximized.

According to another preferred embodiment, in the storage device, the plurality of mount tables have the mount-table-moving mechanism for each group of mount tables, and the mount-table-moving mechanism can move the group of mount tables all together. By virtue of this configuration, when the size of the articles-to-be-stored of a certain group is changed, the mount tables on which these articles-to-be-stored are to be respectively placed can be moved to relevant positions all together, thereby improving work efficiency.

According to still another preferred embodiment, in the storage device, the group of mount tables to be moved all together by the mount-table-moving mechanism are arranged in series in an X-direction or in a Y-direction. By virtue of this configuration, a plurality of articles-to-be-stored of different sizes can be managed on a row or column basis, thereby facilitating management of the plurality of articles-to-be-stored of different sizes.

According to yet another preferred embodiment, in the storage device, the group of mount tables to be moved all together by the mount-table-moving mechanism are moved in the Y-direction or in the X-direction. By virtue of this configuration, when the group of mount tables to be moved all together by the mount-table-moving mechanism need to be moved because of change in size of the articles-to-be-stored to be placed respectively thereon, the mount tables can be moved efficiently through travel along a shortest moving distance.

According to a further embodiment, in the storage device, the group of mount tables to be arranged in series in the X-direction or in the Y-direction store a plurality of articles-to-be-stored of the same size placed thereon in a one-to-one correspondence. By virtue of this configuration, a plurality of articles-to-be-stored of the same size are placed and stored on the respective mount tables on a row or column basis; thus, management of the plurality of articles-to-be-stored can be further facilitated.

### EFFECTS OF THE INVENTION

As mentioned above, according to the storage device of the present invention, the plurality of mount tables capable of storing a plurality of articles-to-be-stored of different sizes placed thereon in a one-to-one correspondence store the articles-to-be-stored placed thereon such that the adjacent articles-to-be-stored are spaced apart from each other by a predetermined interval in the lower horizontal plane, and have the mount-table-moving mechanism movable in at least one direction in a horizontal plane. Thus, when the plurality of articles-to-be-stored of different sizes are to be stored in a field, the mount-table-moving mechanism is operated for moving the mount tables on which the articles-to-be-stored of a relevant size are respectively placed, to positions where useless storage space would otherwise arise. By this procedure, the plurality of articles-to-be-stored of different sizes can be stored at optimum intervals.
Thus, the storage device can flexibly and readily cope with storage of the articles-to-be-stored of various sizes. Even when an article feature raises a large dimensional difference between an article-to-be-stored having a maximum outline size and an article-to-be-stored having a minimum outline size, the storage device can prevent occurrence of useless storage space to the greatest possible extent, thereby effectively utilizing storage space.

Also, in the case where the plurality of mount tables have the mount-table-moving mechanism for each of the mount tables, utilization of storage space can be maximized.

Also, in the case where the plurality of mount tables have the mount-table-moving mechanism for each group of mount tables, and the mount-table-moving mechanism can move the group of mount tables all together, when the size of the articles-to-be-stored of a certain group is changed, the mount tables on which these articles-to-be-stored are to be respectively placed can be moved to relevant positions all together, thereby improving work efficiency.

Further, in the case where the group of mount tables to be moved all together by the mount-table-moving mechanism are arranged in series in an X-direction or in a Y-direction, a plurality of articles-to-be-stored of different sizes can be managed on a row or column basis, thereby facilitating management of the plurality of articles-to-be-stored of different sizes.

Also, in the case where the group of mount tables to be moved all together by the mount-table-moving mechanism are moved in the Y-direction or in the X-direction, when the group of mount tables to be moved all together by the mount-table-moving mechanism need to be moved because of change in size of the articles-to-be-stored to be placed respectively thereon, the mount tables can be moved efficiently through travel along a shortest moving distance.

Also, in the case where the group of mount tables to be arranged in series in the X-direction or in the Y-direction store a plurality of articles-to-be-stored of the same size placed thereon in a one-to-one correspondence, the plurality of articles-to-be-stored of the same size are placed and stored on the respective mount tables on a row or column basis; thus, management of the plurality of articles-to-be-stored can be further facilitated.

### BRIEF DESCRIPTION OF THE DRAWINGS

FIG. 1 is a plan view of a storage device according to an embodiment of the present invention.
FIG. 2 is a schematic front view of the storage device.
FIG. 3 is a schematic left side view of the storage device with a storing conveyance device removed.
FIG. 4 is an enlarged partial view of FIG. 1.
FIG. 5 is a front view of a portion corresponding to FIG. 4.
FIG. 6 is a right side view of a portion corresponding to FIG. 4.
FIG. 7 is a view for explaining a procedure for replacing some of a plurality of articles-to-be-stored of the same size with articles-to-be-stored of a different size, showing a state before replacement.
FIG. 8 is a series of views for explaining the procedure of FIG. 7, wherein (a), (b), and (c) are views for explaining step 1, step 2, and step 3, respectively.
FIG. 9 is a pair of views showing an example of optimum arrangement of mount tables in the case where some of a plurality of articles-to-be-stored of the same small size placed respectively on a plurality of the mount tables are to be replaced with articles-to-be-stored of a medium size and with articles-to-be-stored of a large size.
FIG. 10 is a pair of views showing another example of optimum arrangement of mount tables in the case where some of a plurality of articles-to-be-stored of the same small size placed respectively on a plurality of the mount tables are to be replaced with articles-to-be-stored of a medium size and with articles-to-be-stored of a large size.
FIG. 11A is a view for explaining an operation of transferring an article-to-be-stored from a carrying-in position of the storing conveyance device onto a relevant mount table within the storage device by use of a transfer device, showing a first step.
FIG. 11B is a view showing a step subsequent to the step of FIG. 11A.
FIG. 11C is a view showing a step subsequent to the step of FIG. 11B.
FIG. 11D is a view showing a step subsequent to the step of FIG. 11C.
FIG. 12A is a view for explaining an operation of carrying out an article-to-be-stored placed on a mount table to a carrying-out position of a delivering conveyance device by use of the transfer device, showing a first step.
FIG. 12B is a view showing a step subsequent to the step of FIG. 12A.
FIG. 13A is a view showing an operation of transferring an article-to-be-stored from one mount table onto another mount table by use of the transfer device, showing a first step.
FIG. 13B is a view showing a step subsequent to the step of FIG. 13A.
FIG. 13C is a view showing a step subsequent to the step of FIG. 13B.
FIG. 13D is a view showing a step subsequent to the step of FIG. 13C.

### DESCRIPTION OF REFERENCE NUMERALS

1: storage device; 100: mount-table-moving mechanism; 101: first frame; 102: second frame; 103: slide rail; 104: slide rail; 105: rail-mounting member; 106: first fixing member (screw member); 200: mount table group; 201: second fixing member (screw member); 202: fixing member; 203: auxiliary fixing member (screw member); 204: mount member; 205: pin; 206: article sensor; 300: transfer device; 300a, 300b: first and second transfer devices (a pair of three-dimensionally-moving mechanisms); 301: support; 302: stationary guide rail; 303a, 303b: a pair of traveling guide rails; 304a, 304b: a pair of horizontally-vertically moving mechanisms; 305a, 305b: a pair of article-to-be-stored-holding mechanisms; 400: storing conveyance device; 401: carrying-in position; 500: delivering conveyance device; 501: carrying-out position; 600: tire mold group; D, Dab, D'ab, D"ab, Dcd: tire mold; F: floor; Tab, Tcd: mount table; a, c: column in X-direction; b, d: row in Y-direction

### BEST MODE FOR CARRYING OUT THE INVENTION

The storage device has a plurality of mount tables capable of storing a plurality of articles-to-be-stored of different sizes placed thereon in a one-to-one correspondence, and at least one transfer device moving in an upper horizontal plane located above the plurality of mount tables while holding the article-to-be-stored. The transfer device includes a holding mechanism for holding the article-to-be-stored; a vertically moving mechanism for vertically moving the holding mechanism; and a horizontally moving mechanism for moving the vertically moving mechanism in the upper horizontal plane. The plurality of the mount tables store the articles-to-be-stored placed thereon such that the adjacent articles-to-be-stored are spaced apart from each other by a predetermined interval in a lower horizontal plane, and have a mount-table-moving mechanism movable in at least one direction in a horizontal plane.

The plurality of the mount tables have the mount-table-moving mechanism for each of the mount tables or for each group of mount tables. In the latter case, the group of mount tables can be moved all together. In this case, the group of mount tables to be moved all together by the mount-table-moving mechanism are arranged in series in an X-direction or in a Y-direction; are moved in the Y-direction or in the X-direction; and store a plurality of articles-to-be-stored of the same size placed thereon in a one-to-one correspondence.

### EMBODIMENT

Next, an embodiment of the present invention will be described.

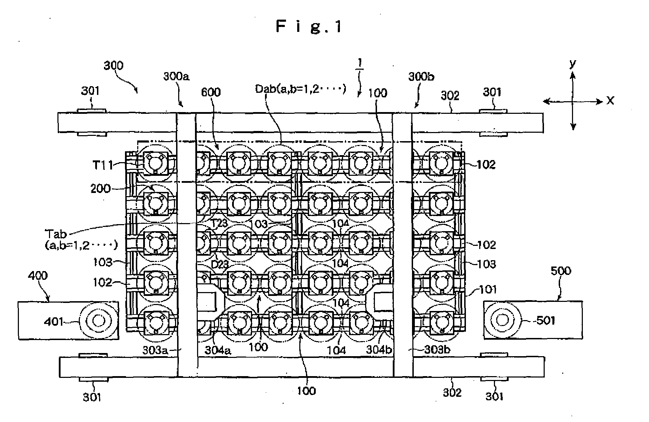

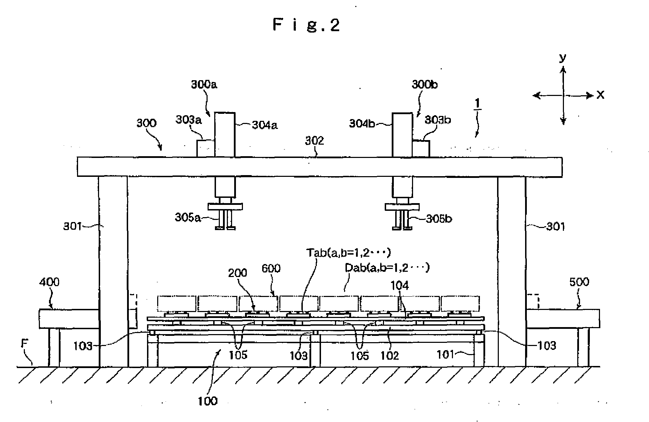

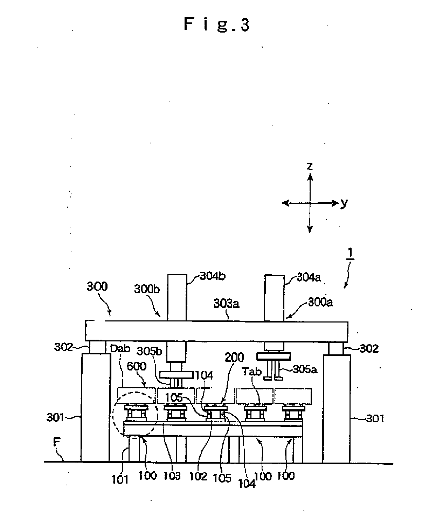

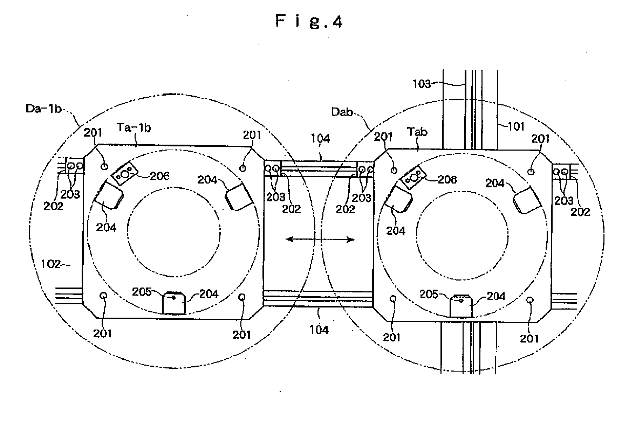

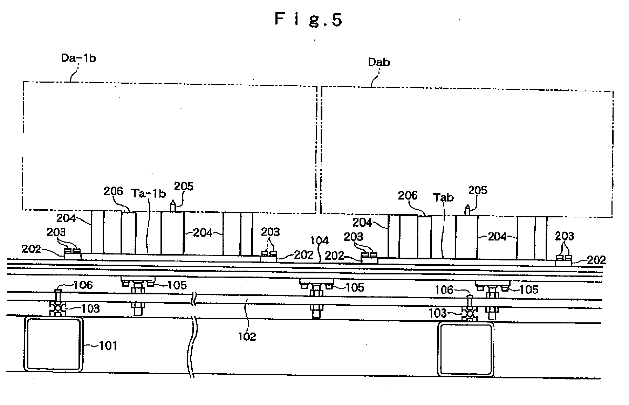

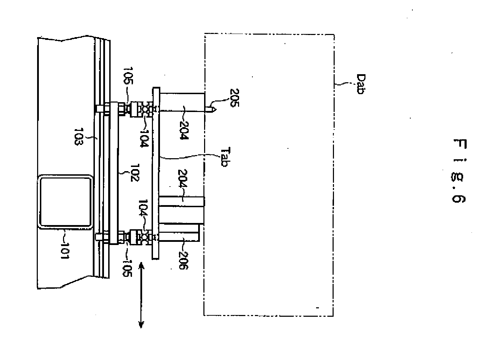

FIG. 1 is a plan view of a storage device of the present embodiment; FIG. 2 is a schematic front view of the storage device; FIG. 3 is a schematic left side view of the storage device with a storing conveyance device removed; FIG. 4 is an enlarged partial view of FIG. 1; FIG. 5 is a front view of a portion corresponding to FIG. 4; and FIG. 6 is a right side view of a portion corresponding to FIG. 4.

The storage device of the present embodiment is used to accommodate and store a plurality of articles of different outline magnitudes (sizes); for example, tire molds. In the following description, a tire mold is taken as an example of an article to be stored (article-to-be-stored). However, the article-to-be-stored is not limited thereto. The storage device of the present embodiment can be used to store not only articles having similar circular outlines but also articles having similar outlines and different outline sizes.

As shown in FIGS. 1 to 6, a storage device 1 of the present embodiment includes a plurality of mount-table-moving mechanisms 100 installed on a floor F; a mount table group 200 consisting of a plurality of mount tables Tab (a, b = 1, 2...), which are placed movably and fixably on the mount-table-moving mechanisms 100; a transfer device 300 installed on the floor F and capable of moving in an upper horizontal plane located above the mount-table-moving mechanisms 100 while holding a tire mold Dab (a, b = 1, 2...); a storing conveyance device 400 installed on the floor F; and a delivering conveyance device 500 installed on the floor F. A plurality of the tire molds Dab (a, b = 1, 2...) constitute a tire mold group 600.

As shown in FIG. 1, suffixes a and b in symbols Tab and Dab indicate a column number and a row number assigned along an X-direction and in a Y-direction, respectively, for a regular array in the X- and Y-directions of the mount table group 200. In this case, the column-row number is counted starting from the mount table T11 located at the upper left corner. Accordingly, for example, a mount table indicated by symbol T23; i.e., the mount table T23, is located in the second column in the X-direction and the third row in the Y-direction. Also, for example, a tire mold indicated by symbol D23; i.e., the tire mold D23, is placed on the mount table T23 located in the second column in the X-direction and the third row in the Y-direction. In the storage device 1 of the present embodiment, suffix a assumes a number of 1 to 8; suffix b assumes a number of 1 to 5; and the column-row number in the tire mold Dab (a, b = 1, 2...) may be missing. A tire mold to which the column-row number a, b is not assigned is represented merely as the "tire mold D." The column-row number a, b can increment or decrement as appropriate.

The mount-table-moving mechanism 100 is configured as follows.
A plurality of (in the present embodiment, three) slide rails 103 extending in the Y-direction are mounted on a first frame 101, which is framed on the floor F by use of structural members (see FIGS. 5 and 6) each having the form of a duct having a squarish cross section. A plurality of (in the present embodiment, five) second frames 102 extending in the X-direction are laid on the slide rails 103 in such a manner as to be movable and fixable in the Y-direction. A pair of slide rails 104 extending in the X-direction are mounted on each of the second frames 102 via rail-mounting members 105. A plurality of (in the present embodiment, eight) mount tables Tab (a = 1 to 8) ride on each pair of the slide rails 104 in a straddling manner and in such a manner as to be movable and fixable in the X-direction. One tire mold Dab is placed on one mount table Tab.

Although details are unillustrated, each of the second frames 102 can be fixed or rendered movable in the Y-direction on the slide rails 103 by establishing or canceling engagement between engaging members (members each having a projection) provided in a protruding condition on the lower side of the second frame 102 and traveling-guide engagement grooves formed in the slide rails 103, through operation of first fixing members 106 (see FIG. 5) provided on the second frame 102. Each of the first fixing members 106 is a screw member and is screwed through a threaded hole formed vertically in the second frame 102, and an externally threaded end portion of the first fixing member 106 is threadingly engaged with an internally threaded portion of the corresponding engaging member provided on the second frame 102. By means of loosening or tightening the threading engagement through operation of the screw member 106, the engaging member of the second frame 102 advances or retreats, thereby loosening or tightening the engaged condition between the engaging member and the traveling-guide engagement groove of the slide rail 103.
The engagement structure between the engaging member provided on the second frame 102 and the traveling-guide engagement groove provided on the slide rail 103 is not limited to the above-described structure, but may be modified in various forms.

The mount table Tab can be fixed or rendered movable in the X-direction on the paired slide rails 104 by operating four screw members 201 (second fixing members; see FIG. 4) which are screwed through four respective threaded holes formed at four corners of a table wall of the mount table Tab, so as to loosen or tighten threading engagements associated with the screw members 201.

In order to ensure fixation of the mount table Tab on the paired slide rails 104, two fixing members 202 each having a rectangular parallelepiped shape are disposed at one side of the mount table Tab with respect to the Y-direction such that the fixing members 202 are in contact with opposite side surfaces of the mount table Tab with respect to the X-direction. The fixing members 202 are fixedly mounted by means of auxiliary fixing members 203. The auxiliary fixing members 203 are screw members. The two screw members 203 are screwed through two respective threaded holes formed through each of the fixing members 202. The two screw members 203; actually, a total of four screw members 203 on the opposite sides, are operated so as to tighten threading engagements associated with the screw members 203, whereby the mount table Tab can be fixed more firmly on the paired slide rails 104.

An engagement structure between an engaging member provided on the mount table Tab and an engaging member provided on the slide rail 104 which is employed for fixing the mount table Tab on the paired slide rails 104 by means of tightening threading engagements associated with the screw members 201 and threading engagements associated with the screw members 203 may be basically similar to that between the engaging member provided on the second frame 102 and the traveling-guide engagement groove provided on the slide rail 103 which is employed for fixing the second frame 102 on the slide rails 103 by means of tightening threading engagements associated with the screw members 106.

As is apparent from the above description, a total of 40 mount tables Tab (a = 1 to 8, b = 1 to 5) ride on a total of five pairs of slide rails 104 lying on a total of five second frames 102. Each of the mount tables Tab can move in the X-direction on the paired slide rails 104 in the row B in the Y-direction. Also, as the second frame 102 in the row b moves on the slide rails 103 in the Y-direction, the eight mount tables Tab (a = 1 to 8) which ride on the paired slide rails 104 in the row b can move all together in the Y-direction.

A mechanism which enables a plurality of (in the present embodiment, eight) the mount tables Tab in the row b in the Y-direction to move in the X-direction on an individual basis and which enables the plurality of mount tables Tab to move all together in the Y-direction is herein called the "mount-table-moving mechanism."
In the storage device 1 of the present embodiment, as is apparent from the above description, the mount-table-moving mechanism 100 is roughly composed of the first frame 101, three slide rails 103, one second frame 102, and a pair of the slide rails 104. A total of five mount-table-moving mechanisms 100 are provided while the first frame 101 and the three slide rails 103 are used in common. Of course, the number of the mount-table-moving mechanisms 100 may be increased or decreased as appropriate.

As mentioned above, eight mount tables Tab (a = 1 to 8) in the row b in the Y-direction ride on the paired slide rails 104. Thus, when the size of eight tire molds Dab (a = 1 to 8) placed on the eight respective mount tables Tab (a = 1 to 8) is changed, the eight mount tables Tab (a = 1 to 8) can be moved in the Y-direction to their respective positions all together along their respective shortest moving distances by means of moving the second frame 102 in the Y-direction and thus can be moved efficiently. Such moving work is carried out in order to maintain a predetermined optimum interval between the tire mold Dab (a = 1 to 8) and Y-directionally adjacent tire mold Dab' (a = 1 to 8, b' = b ± 1; "'" indicates an adjacent row) for avoiding occurrence of useless space. As a result, storage space is utilized with high effectiveness.

As mentioned above, a plurality of the mount tables Tab (a = 1, 2...) in the row b in the Y-direction ride on each pair of the slide rails 104. Thus, as viewed from the entire storage device 1, a plurality of the tire molds Dab (a, b = 1, 2...) of different sizes can be managed per row, thereby facilitating management of the plurality of tire molds Dab of different sizes.

The storage device 1 of the present embodiment allows the tire molds Dab (a = 1 to 8) of different sizes to be mixedly disposed in the X-direction in any row b in the Y-direction (b = 1 to 5). In this case, one of the adjacent tire molds Dab and Da'b (a' = a ± 1) is moved toward or away from the other tire mold in the X-direction on the paired slide rails 104 so as to maintain a predetermined optimum interval therebetween.

Next, the structure of the transfer device 300 will be described in detail.
As shown in FIGS. 1 to 3, four supports 301 stand on the floor F and support a pair of horizontal, stationary guide rails 302, which extend in the X-direction in parallel with each other. A pair of traveling guide rails 303a, 303b lie between and on the paired horizontal, stationary guide rails 302 in a straddling manner and in such a manner as to be movable in the X-direction while extending along the Y-direction. Paired horizontally-vertically moving mechanisms 304a, 304b are movably attached to the paired traveling guide rails 303a, 303b, respectively. Each of the paired horizontally-vertically moving mechanisms 304a, 304b has a built-in traveler capable of traveling along the relevant traveling guide rail 303a or 303b, and a built-in elevating mechanism capable of moving vertically.

Thus, the four supports 301, the paired stationary guide rails 302, the paired traveling guide rails 303a, 303b, and the paired travelers incorporated respectively in the paired horizontally-vertically moving mechanisms 304a, 304b constitute a pair of horizontally moving mechanisms, which share the four supports 301 and the paired stationary guide rails 302. Further, the paired horizontally moving mechanisms, and the paired elevating mechanisms incorporated respectively in the paired horizontally-vertically moving mechanisms 304a, 304b constitute a pair of three-dimensionally moving mechanisms, which share the four supports 301 and the paired stationary guide rails 302; in other words, a pair of transfer devices 300a, 300b (hereinafter, referred to as the first and second transfer devices 300a, 300b). The transfer device 300 is a general term for the first and second transfer devices 300a, 300b.
The above-mentioned horizontally moving mechanism and three-dimensionally moving mechanism are well known and are disclosed in, for example, Japanese Patent Application Laid-Open (kokai) No. 2003-72944 filed by the applicant of the present invention.

Paired article-to-be-stored-holding mechanisms 305a, 305b are attached to lower portions of the paired horizontally-vertically moving mechanisms 304a, 304b, respectively. By means of each of the paired three-dimensionally moving mechanisms moving to a required position, each of the paired article-to-be-stored-holding mechanisms 305a, 305b can hold the tire mold Dab placed on the mount table Tab or the tire mold D placed at a carrying-in position 401 of a storing conveyance device 400, and also can release the tire mold Dab which it holds onto the mount table Tab or the like.

For example, the article-to-be-stored-holding mechanism 305a which is holding the tire mold Dab is lifted upward by the horizontally-vertically moving mechanism 304a and is then moved in the upper horizontal plane located above the mount tables Tab to a position located immediately above a predetermined mount table Tcd (c ≠ a, d ≠ b, or c = a, d ≠ b, or c ≠ a, d = b; a, c = 1 to 8, b, d = 1 to 5) or to a position located immediately above a carrying-out position 501 of the delivering conveyance device 500 by the corresponding horizontally moving mechanism. Next, the article-to-be-stored-holding mechanism 305a is lowered by the horizontally-vertically moving mechanism 304a and then releases the tire mold Dab which it holds, onto the predetermined mount table Tcd or onto the carrying-out position 501 of the delivering conveyance device 500, thereby placing the tire mold Dab thereon.

As shown in FIGS. 4 to 6, the mount table Tab has three mount members 204 standing on its upper surface at circumferentially equal intervals and adapted to actually support the tire mold Dab. One of the three mount members 204 has a pin 205 projecting from its top face and adapted to position the tire mold Dab on the three mount members 204. The pin 205 is fitted into a pin hole which is formed on the rear side of the tire mold Dab at a predetermined position, thereby circumferentially positioning the tire mold Dab which is held by the article-to-be-stored-holding mechanism 305a or 305b. The mount table Tab also has an article sensor 206 provided on its upper surface and adapted to detect whether or not the tire mold Dab is present.

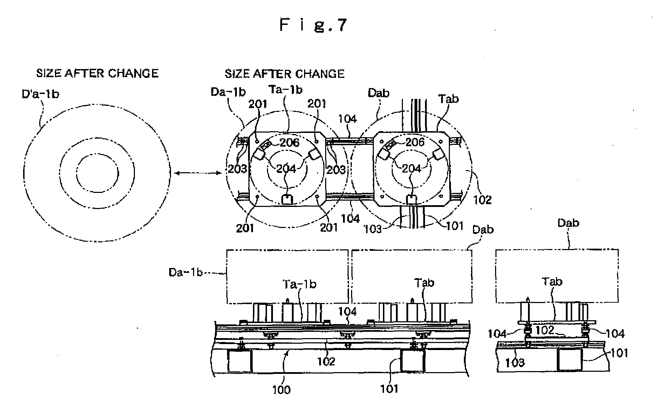

In the storage device 1 of the present embodiment, as mentioned previously, the eight mount tables Tab (a = 1 to 8) in the row b in the Y-direction ride on the paired slide rails 104; furthermore, the eight tire molds Dab (a = 1 to 8) of the same size are placed on the eight mount tables Tab (a = 1 to 8), respectively.
A procedure for replacing some of the eight tire molds Dab (a = 1 to 8) of the same size with tire molds D'ab of a different size will next be described with reference to FIG. 7.

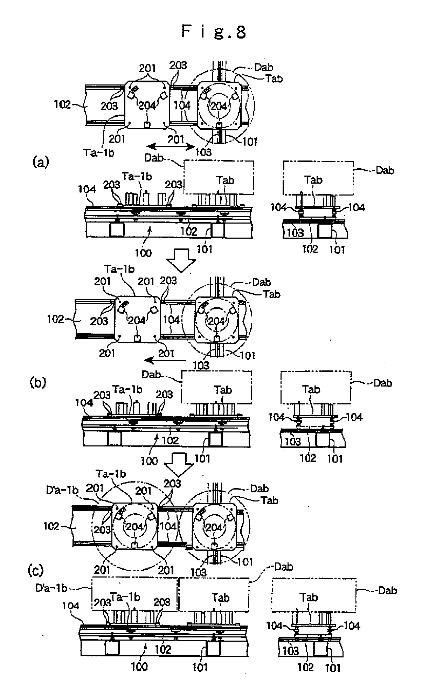

In FIG. 7, when the tire mold Da-1b is to be replaced with the tire mold D'a-1b, which is greater in outline size than Da-1b, first, the currently existing tire mold Da-1b is removed from the mount table Ta-1b by use of the transfer device 300. Next, two each of left and right; i.e., a total of four auxiliary fixing members (screw members) 203, and one each of four corners; i.e., a total of four second fixing members (screw members) 201 are loosened for unfixing the mount table Ta-1b from the paired slide rails 104 (step 1 shown in FIG. 8(a)).

Next, the mount table Ta-1b is moved on the paired slide rails 104 in the X-direction by a predetermined distance corresponding to the size of the tire mold D'a-1b to be newly placed. Then, the four auxiliary fixing members (screw members) 203 and the four second fixing members (screw members) 201 are tightened again, thereby fixing the mount table Ta-1b on the paired slide rails 104 (step 2 shown in FIG. 8(b)).

Notably, step 2 may be modified as follows. The mount table Ta-1b is moved to a rough position (where the tire mold D'a-1b to be newly placed on the mount table Ta-1b and the tire mold Dab placed on the mount table Tab do not interfere with each other) on the paired slide rails 104. Subsequently, the tire mold D'a-1b is actually placed on the mount table Ta-1b. Then, the mount table Ta-1b is positionally adjusted to a precise position and is then fixed.

Next, by means of the transfer device 300, the new tire mold D'a-1b is moved to a position located immediately above the mount table Ta-1b and is then lowered and placed on the mount table Ta-1b. Then, relative arrangement is checked for interference between the tire mold D'a-1b and the adjacent tire mold Dab and the like. Subsequently, in order that the position of the article-to-be-stored-holding mechanism 305a or 305b of the transfer device 300 and the position of the mount table Ta-1b agree with each other, positional check is performed, and positional information about the mount table Ta-1b stored in the transfer device 300 is revised accordingly (step 3 shown in FIG. 8(c)).

The above-described steps 1 to 3 shown in FIGS. 8(a) to 8(c) are of a procedure for moving the mount table Ta-1b in the X-direction for placing the tire mold D'a-1b of a different size on the mount table Ta-1b among a plurality of the mount tables Tab (a = 1 to 8) arranged in the row b in the Y-direction. In the case where moving the mount table Ta-1b in the Y-direction is needed, the first fixing members (screw members) 106 are operated so as to loosen and tighten threading engagements associated with the first fixing members 106. By this procedure, the associated second frame 102 is moved in the Y-direction on the slide rails 103 by a predetermined distance and is then fixed, thereby setting the mount table Ta-1b at a predetermined position in the Y-direction. For other operations, the previously described moving procedure may be followed.

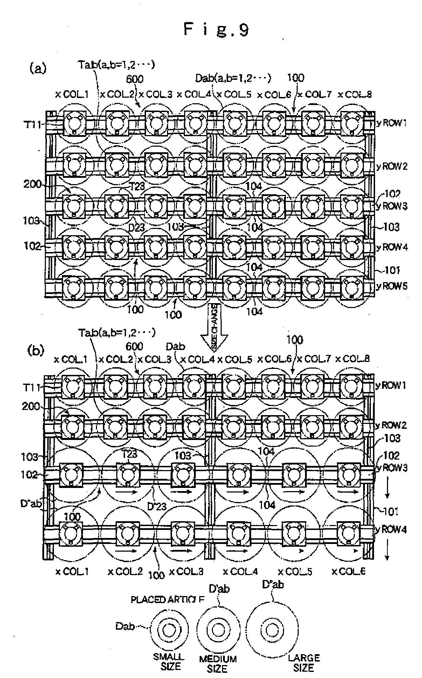

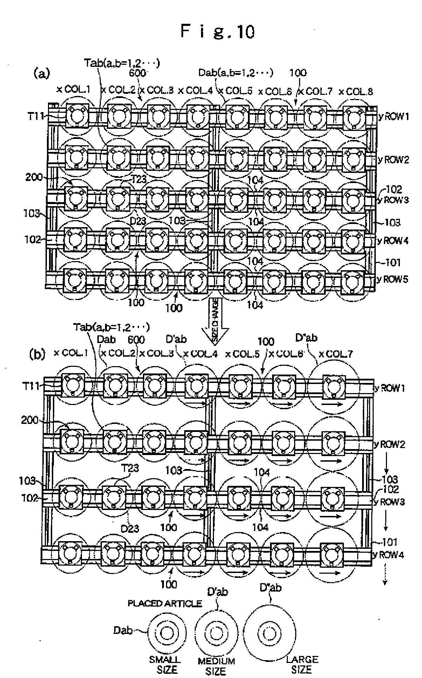

FIGS. 9 and 10 show an example of optimum arrangement of the mount tables Tab (a ≤ 1 to 8, b ≤ 1 to 5) in the case where some of the tire molds Dab (a = 1 to 8, b = 1 to 5) of the same small size placed on the mount tables Tab (a = 1 to 8, b = 1 to 5) are replaced with the tire molds D'ab of a medium size and tire molds D"ab of a large size by means of appropriately combining an X-directional movement of the mount tables Tab (a = 1 to 8, b = 1 to 5) on the paired slide rails 104 and a Y-directional movement of the mount tables Tab (a = 1 to 8, b = 1 to 5) through utilization of a Y-directional movement of the second frame 102 on the slide rails 103 as mentioned above.

FIG. 9 shows an example of arrangement of the mount tables Tab (a ≤ 1 to 8, b = 1 to 4) in the case where, in place of the tire molds Dab (a = 1 to 6, b = 3, 4) of the small size, the tire molds D"ab (a = 1 to 6, b = 3, 4) of the large size are placed on the mount tables Tab (a = 1 to 6, b = 3, 4) in the rows 3 and 4 in the Y-direction. In this example, the mount tables Tab (a = 1 to 6, b = 3, 4) in the rows 3 and 4 in the Y-direction are moved individually in the X-direction on the paired slide rails 104 and are moved all together in the Y-direction through Y-directional movement of the individual second frames 102 on the slide rails 103. In these rows, the excess mount tables Tab (a = 7, 8, b = 3, 4) may be left unused without being removed from the storage area.
In the rows 1 and 2 in the Y-directional, the arrangement of the mount tables Tab (a = 1 to 8, b = 1, 2) remains unchanged.

FIG. 10 shows an example of optimum arrangement of the mount tables Tab (a = 1 to 7, b = 1 to 4) in the case where the tire molds Dab (a = 1 to 3, b = 1 to 4) of the small size, the tire molds D'ab (a = 4 to 6, b = 1 to 4) of the medium size, and the tire molds D"ab (a = 7, b = 1 to 4) are mixedly placed on the mount tables Tab (a = 1 to 7, b = 1 to 4) in the rows 1 to 4 in the Y-direction. In the present arrangement example, the tire molds Dab of the small size placed on the mount tables Tab are arranged in three columns in the X-direction and in four rows in the Y-directional; the tire molds D'ab of the medium size placed on the mount tables Tab are arranged in three columns in the X-direction and in four rows in the Y-direction; and the tire molds D"ab of the large size placed on the mount tables Tab are arranged in one column in the X-direction and in four rows in the Y-direction.

In the present arrangement example, the mount tables Tab (a = 4 to 7, b = 1 to 4) in the columns 4 to 7 in the X-direction and in the rows 1 to 4 in the Y-direction are moved individually in the X-direction on the paired slide rails 104 of each of the rows 1 to 4 in the Y-direction. Also, the mount tables Tab (a = 1 to 7, b = 2 to 4) in the rows 2 to 4 in the Y-direction are moved all together through Y-directional movement of the corresponding second frames 102 on the slide rails 103 in such a manner that the mount tables Tabin in each row in the Y-direction are moved together. Such an X-directional movement and a Y-directional movement of the mount tables Tab (a = 1 to 7, b = 1 to 4) are performed according to the size of the tire mold D'ab of the medium size and the size of the tire mold D"ab of the large size. As a result, all of the tire molds are stored at optimum intervals, thereby effectively utilizing storage space.
Notably, the arrangement of the tire molds D in the present embodiment may be such that the X-directional arrangement of the tire molds D in the row 2 in the Y-direction is symmetrical with that of the tire molds D in the row 1 in the Y-direction. This enables far more effective utilization of storage space along the Y-direction.

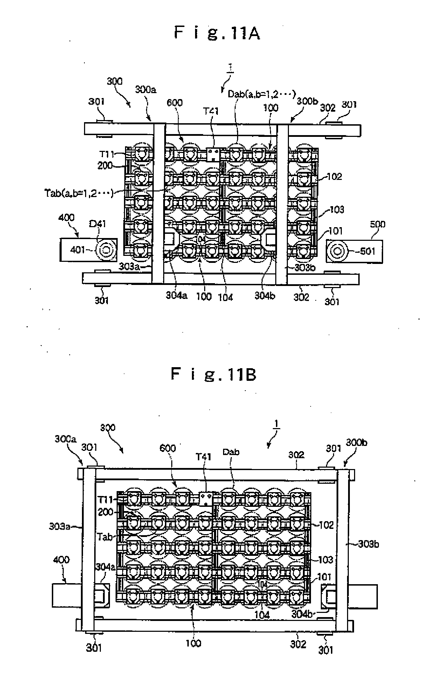

Next will be described an operation of transferring the tire mold Dab from the carrying-in position 401 of the storing conveyance device 400 onto the mount table Tab in the storage device 1 by use of the transfer device 300.
Now, assuming that, as shown in FIG. 11A, a tire mold D41 has been conveyed on a carrying-in conveyor (not shown) to the carrying-in position 401 of the storing conveyance device 400, the traveling guide rail 303a and the horizontally-vertically moving mechanism 304a, which constitute the first transfer device 300a, move toward the carrying-in position 401. Then, the built-in elevating mechanism of the horizontally-vertically moving mechanism 304a lowers from above the carrying-in position 401. The article-to-be-stored-holding mechanism 305a (see FIG. 2) attached to a lower portion of the elevating mechanism holds the tire mold D41, and the elevating mechanism rises again (see FIG. 11B).

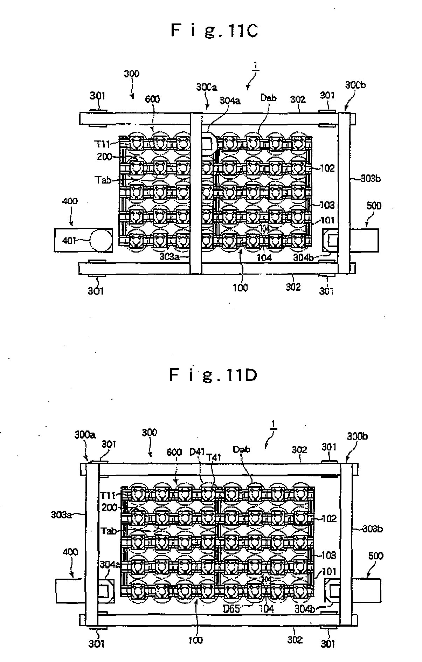

Next, the traveling guide rail 303a and the horizontally-vertically moving mechanism 304a, which constitute the first transfer device 300a, move toward the position of a mount table T41 which is located within the storage area and on which the tire mold D41 is to be placed. Then, the built-in elevating mechanism of the horizontally-vertically moving mechanism 304a lowers from above the mount table T41. The article-to-be-stored-holding mechanism 305a attached to the lower portion of the elevating mechanism releases the tire mold D41 onto the mount table T41, thereby placing the tire mold D41 on the mount table T41. Then, the elevating mechanism rises again (see FIG. 11C).

Next, the traveling guide rail 303a and the horizontally-vertically moving mechanism 304a, which constitute the first transfer device 300a, move again toward the carrying-in position 401 of the storing conveyance device 400 and stand by until the next tire mold D is conveyed to the carrying-in position 401 (see FIG. 11D).

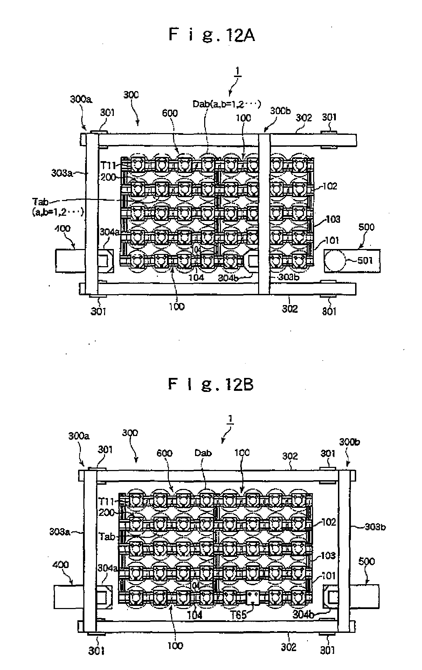

Next will be described an operation of carrying out the tire mold Dab placed on the mount table Tab to the carrying-out position 501 of the delivering conveyance device 500 by use of the transfer device 300.
In a condition of FIG. 11D, upon request of the tire mold D65 from another step, the traveling guide rail 303b and the horizontally-vertically moving mechanism 304b, which constitute the second transfer device 300b, move to a position located above the mount table T65 on which the tire mold D65 is placed. The built-in elevating mechanism of the horizontally-vertically moving mechanism 304b lowers from above the mount table T65. The article-to-be-stored-holding mechanism 305b (see FIG. 2) attached to a lower portion of the elevating mechanism holds the tire mold D65, and the elevating mechanism rises again (see FIG. 12A).

Next, the traveling guide rail 303b and the horizontally-vertically moving mechanism 304b, which constitute the second transfer device 300b, move toward the carrying-out position 501 of the delivering conveyance device 500. Then, the built-in elevating mechanism of the horizontally-vertically moving mechanism 304b lowers from a position above the carrying-out position 501. The article-to-be-stored-holding mechanism 305b attached to the lower portion of the elevating mechanism releases the tire mold D65 onto the carrying-out position 501, thereby placing the tire mold D65 at the carrying-out position 501. Then, the elevating mechanism rises again (see FIG. 12B).

Next, the traveling guide rail 303b and the horizontally-vertically moving mechanism 304b, which constitute the second transfer device 300b, maintain the article-to-be-stored-holding mechanism 305b in an elevated condition and stand by at the position without moving horizontally until the next instruction is received (see FIG. 12B).

Next will be described an operation of transferring the tire mold Dab from the mount table Tab onto another mount table Tcd (a ≠ c, b ≠ d, a to d = 1,2...).
In a condition where the tire mold D is not conveyed on the carrying-in conveyor from another step to the carrying-in position 401 of the storing conveyance device 400, there may be issued an instruction for the relocation of the tire mold Dab within the storage area.

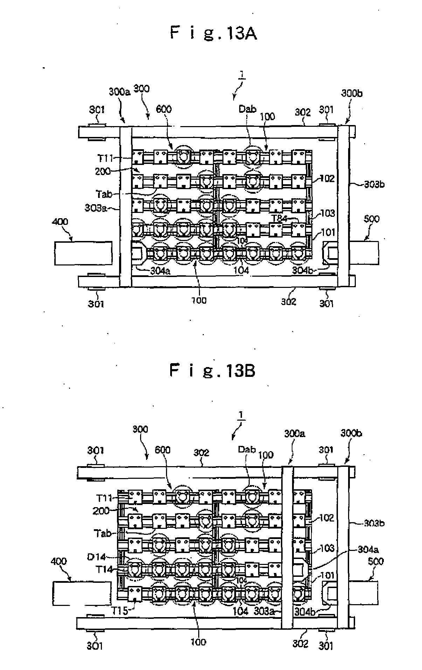

In this case, the second transfer device 300b stands by at a position located above the carrying-out position 501 of the delivering conveyance device 500, and the first transfer device 300a moves to a position located above a mount table T15, which is located nearest to the carrying-in position 401 of the storing conveyance device 400 among a plurality of the mount tables Tab on which a plurality of the tire molds Dab are respectively placed. Then, the built-in elevating mechanism of the horizontally-vertically moving mechanism 304a lowers. The article-to-be-stored-holding mechanism 305a attached to a lower portion of the elevating mechanism holds a tire mold D15 (not shown) placed on the mount table T15, and the elevating mechanism rises again (see FIG. 13A).

Next, the first transfer device 300a moves to a position located above a mount table T84, which is located nearest to the carrying-out position 501 of the delivering conveyance device 500 among a plurality of vacant mount tables Tab. Then, the built-in elevating mechanism of the horizontally-vertically moving mechanism 304a lowers. The article-to-be-stored-holding mechanism 305a attached to the lower portion of the elevating mechanism releases the tire mold D15 onto the mount table T84, thereby placing the tire mold D15 on the mount table T84. Then, the elevating mechanism rises again (see FIG. 13B).

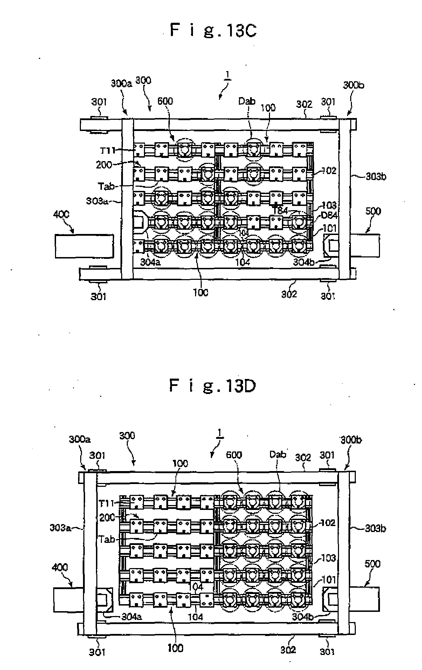

Next, the first transfer device 300a moves to a position located above a mount table T14, which is located second nearest to the carrying-in position 401 of the storing conveyance device 400, and repeats the above-described operation (see FIG. 13C).
In FIG. 13B, a new column-row number is assigned to the tire mold D15 which was previously placed on the mount table T84, so that the tire mold D15 is indicated as the tire mold D84.

Subsequently, a similar operation is repeated for transferring the tire molds Dab so as not to leave vacant mount tables Tab in a region close to the carrying-out position 501 of the delivering conveyance device 500, thereby completing the relocation of the tire molds Dab. Upon completion of the relocation, the first transfer device 300a moves to a position located above the carrying-in position 401 of the storing conveyance device 400 and stands by at the position (see FIG. 13D).

The storage device 1 of the present embodiment is configured as described above and can therefore yield the following effects.
A plurality of the mount tables Tab (a, b = 1, 2...) capable of storing a plurality of tire molds (articles-to-be-stored) Dab (a, b = 1, 2...) of different sizes placed thereon in a one-to-one correspondence store the tire molds Dab placed thereon such that the adjacent tire molds are spaced apart from each other by a predetermined interval in a lower horizontal plane, and have the mount-table-moving mechanism 100 movable in at least one direction in a horizontal plane. Thus, when the plurality of tire molds Dab (a, b = 1, 2...) of different sizes are to be stored in a field, the mount-table-moving mechanism 100 is operated for moving the mount tables Tab on which the tire molds Dab of a relevant size are respectively placed, to positions where useless storage space would otherwise arise. By this procedure, the plurality of tire molds Dab (a, b = 1, 2...) of different sizes can be stored at optimum intervals. Thus, the storage device can flexibly and readily cope with storage of the plurality of tire molds Dab (a, b = 1, 2...) of various sizes. Even when a feature of the tire mold D raises a large dimensional difference between the tire mold D having a maximum outline size and the tire mold D having a minimum outline size, the storage device can prevent occurrence of useless storage space to the greatest possible extent, thereby effectively utilizing storage space.

Also, the plurality of mount tables Tab (a, b = 1, 2...) have the mount-table-moving mechanism 100 for each group of mount tables Tab (a = 1, 2...), and the mount-table-moving mechanism can move the group of mount tables Tab all together. Thus, when the size of tire molds Dab (a = 1, 2...) of a certain group is changed, the mount tables Tab (a = 1, 2...) on which these tire molds Dab (a = 1, 2...) are to be respectively placed can be moved to relevant positions all together, thereby improving work efficiency.

Further, the plurality of mount tables Tab (a = 1, 2...) to be moved all together by the mount-table-moving mechanism 100 are arranged in series in the X-direction. Thus, the plurality of tire molds Dab (a = 1, 2...) of different sizes can be managed on a row basis, thereby facilitating management of the plurality of tire molds Dab (a, b = 1, 2...) of different sizes.

Also, the plurality of mount tables Tab (a = 1, 2...) to be moved all together by the mount-table-moving mechanism 100 are moved in the Y-direction. Thus, when the plurality of mount tables Tab (a = 1, 2...) to be moved all together by the mount-table-moving mechanism 100 need to be moved because of change in size of the plurality of tire molds Dab (a = 1, 2...) to be placed respectively thereon, the mount tables Tab (a = 1, 2...) can be moved efficiently through travel along a shortest moving distance.

Also, in the case where the plurality of mount tables Tab (a = 1, 2...) to be arranged in series in the X-direction store a plurality of the tire molds Dab (a = 1, 2...) of the same size placed thereon in a one-to-one correspondence, the plurality of tire molds Dab (a = 1, 2...) of the same size are placed and stored on the respective mount tables Tab (a = 1, 2...) on a row basis; thus, management of the plurality of tire molds Dab (a, b = 1, 2...) can be further facilitated.

The present invention is not limited to the above-described embodiment. Numerous modifications and variations of the present invention are possible without departing from the gist of the invention.
For example, the plurality of mount tables Tab (a, b = 1, 2...) may have an automatic mount-table-moving mechanism for each of the mount tables Tab. In this case, the automatic mount-table-moving mechanism, different from the mount-table-moving mechanism 100, can freely move along the X-direction and the Y-direction on rails laid on a grid and, in cooperation with the transfer device 300, can store a plurality of the tire molds (articles-to-be-stored) Dab (a, b = 1, 2...) of different sizes at minimum, optimum intervals, whereby the storage space can be utilized effectively to the greatest extent.

A plurality of the mount tables Tab (a = 1, 2...) to be moved all together by the mount-table-moving mechanism 100 are arranged in series in the X-direction; however, the present invention is not limited thereto. A plurality of the mount tables may be arranged in series in the Y-direction. In this case, the structure of the mount-table-moving mechanism 100 is changed such that the slide rails 103 are laid along the X-direction and such that pairs of the slide rails 104 are laid along the Y-direction.

## Claims

1. A storage device having a plurality of mount tables capable of storing a plurality of articles-to-be-stored of different sizes placed thereon in a one-to-one correspondence, and at least one transfer device moving in an upper horizontal plane located above the plurality of mount tables while holding the article-to-be-stored,
the transfer device comprising:
a holding mechanism for holding the article-to-be-stored;
a vertically moving mechanism for vertically moving the holding mechanism; and
a horizontally moving mechanism for moving the vertically moving mechanism in the upper horizontal plane;
wherein the plurality of mount tables store the articles-to-be-stored placed thereon such that the adjacent articles-to-be-stored are spaced apart from each other by a predetermined interval in a lower horizontal plane, and have a mount-table-moving mechanism movable in at least one direction in a horizontal plane.

2. A storage device according to claim 1, wherein the plurality of mount tables have the mount-table-moving mechanism for each of the mount tables.

3. A storage device according to claim 1, wherein the plurality of mount tables have the mount-table-moving mechanism for each group of mount tables, and the mount-table-moving mechanism can move the group of mount tables all together.

4. A storage device according to claim 3, wherein the group of mount tables to be moved all together by the mount-table-moving mechanism are arranged in series in an X-direction or in a Y-direction.

5. A storage device according to claim 4, wherein the group of mount tables to be moved all together by the mount-table-moving mechanism are moved in the Y-direction or in the X-direction.

6. A storage device according to claim 4 or 5, wherein the group of mount tables to be arranged in series in the X-direction or in the Y-direction store a plurality of articles-to-be-stored of the same size placed thereon in a one-to-one correspondence.
